# EUROPÄISCHE PATENTSCHRIFT

(11) **EP 0 422 750 B1**
(45) Veröffentlichungstag und Bekanntmachung des Hinweises auf die Patenterteilung: **03.03.1993**
(21) Anmeldenummer: 90250245.9
(22) Anmeldetag: 25.09.1990
(51) Int. Cl.: A23L 1/317, A23K 1/10, A23K 1/18

(54) **Verfahren zur Herstellung eines stückigen Fleischemulsionsproduktes**
Process for the production of a meat-emulsion-product in pieces
Procédé pour la production d'un produit d'émulsion de viande en pièces

(30) Priorität: 04.10.1989 DE 3933528
(43) Veröffentlichungstag der Anmeldung: 17.04.1991
(73) Patentinhaber: EFFEM GmbH, D-27283 Verden (DE)
(72) Erfinder: Reimann, Josef, D-2816 Kirchlinteln-Hohenaverbergen (DE); Sirel, Tas, D-2810 Verden/Aller (DE); Czempik, Klaus, Dr., D-4950 Minden (DE); Steinberg, Eckart, D-2810 Verden (DE); Hornig, Rolf, D-2816 Kirschlinteln-Luttum (DE); Köhler, Friedrich, Dr., D-2811 Martfeld-Loge (DE)
(74) Vertreter: Goddar, Heinz J., Dr.

(56) Entgegenhaltungen:
- EP-A- 0 265 740
- GB-A- 2 025 750
- US-A- 3 615 693

## Beschreibung

Die Erfindung betrifft ein Verfahren zur Herstellung eines stückigen Fleischemulsionsproduktes, wobei die Ausgangsmaterialien bei Temperaturen von unter 50° C zu einer Fleischemulsion verarbeitet werden.

Fleischemulsionen werden in der Nahrungsmittelindustrie, insbesondere auch auf dem Gebiet der Heimtiernahrung, seit langem in großen Umfang eingesetzt. Dabei besteht das Bedürfnis, einen möglichst hohen Anteil an fleischlichen Rohmaterialien zu verwenden, ggf. in Kombination mit pflanzlichen Proteinen, da diese wichtige Nährstoffträger für Protein, Mineralstoffe, Spurenelemente, Fett und Vitamine darstellen, hochverträglich und hochverdaulich sowie gleichzeitig sehr schmackhaft sind und damit eine optimale Basis für eine ausreichende Nährstoffaufnahme durch die Tiere zur Verfügung stellen.

Das allgemeine Problem in diesem Zusammenhang besteht darin, daß nicht vorbehandelte fleischliche Rohmaterialien während des unumgänglich notwendigen Sterilisationsprozesses bei der Herstellung entsprechender Produkte Stückigkeit und Textur nahezu vollständig verlieren. Form, Stückgröße, Struktur und Festigkeit sind nun aber elementare Bestandteile einer artgerechten Ernährung und wesentliche Faktoren für eine hohe Tierakzeptanz. Sie sichern somit die optimale Tierernährung.

Aus der EP-OS 0 265 740 ist ein Verfahren zur Herstellung eines Fleischemulsionsproduktes bekannt, bei dem eine Fleischemulsion bestimmter Zusammensetzung rasch auf Temperaturen oberhalb von 100° C, vorzugsweise zwischen 104 und 118° C, erhitzt wird. Bei dieser Temperatur koagulieren und denaturieren sowohl die tierischen als auch die pflanzlichen Proteine in der Emulsion mit sehr schneller Geschwindigkeit. Die heiße Emulsion wird anschließend in ein Prozeßrohr gepumpt, in dem sie unter Überdruck bis zur vollständigen Koagulation der Proteine verbleibt. Die frühzeitige Koagulation und Denaturierung der Proteine in der Emulsion hat sich nunmehr aus ernährungsphysiologischen Gründen als nachteilig herausgestellt. Insbesondere die fleischlichen Rohmaterialien verlieren bei einem derartigen Herstellungprozeß deutlich an Textur, was bei dem bekannten Verfahren im nachhinein durch einen energie- und arbeitsaufwendigen Prozeßschritt der kontrollierten Verdampfung von in der Emulsion vorhandenem Wasser bzw. zusätzlicher Injektion von Heißdampf zur Erzeugung einer schichtähnlichen Struktur mit allerdings nur mäßigem Erfolg wieder versucht wird auszugleichen. Darüber hinaus führt die Erhöhung des Fleischanteils in der Emulsionsmasse über 80 % hinaus bei den bekannten Verfahren zu Schwierigkeiten in der Prozeßführung, da in diesem Fall leicht eine zu schnelle Koagulation der Emulsionsmasse erfolgen kann, was sich weiter nachteilig auf deren Textur auswirkt. Die geschilderten Nachteile des bekannten Produktes beeinträchtigten dabei auch direkt dessen Tierakzeptanz.

Der Erfindung liegt daher die Aufgabe zugrunde, ein gattungsgemäßes Verfahren zu schaffen, das die Nachteile des Standes der Technik vermeidet und eine einfache und preisgünstige Herstellung von stückigen Fleischemulsionsprodukten ermöglicht, in dem fleischliche Rohmaterialien als wertvolle Nährstoffträger insbesondere für hochverdauliches Eiweiß durch tieradäquate Stückgröße und Bißfestigkeit weiterhin nutzbar bleiben, wobei gleichzeitig die Anreicherungsmöglichkeit mit ergänzenden Nährstoffen und deren Überführung in eine tieradäquate Form geschaffen werden soll.

Erfindungsgemäß wird diese Aufgabe dadurch gelöst, daß die Fleischemulsion durch einen Spalt zwischen den Platten eines Hochgeschwindigkeitsemulgators in ein Prozeßrohr gedrückt und dabei schnell auf 40 bis 75° C erhitzt wird, wobei die in den Ausgangsmaterialien enthaltenen Proteine im wesentlichen tierischen Ursprungs sind und hinsichtlich Temperatur und Zeitdauer unterschiedliches Koagulationsverhalten zeigen. Das erfindungsgemäße Verfahren macht sich dabei mit überraschend positiven Auswirkungen auf die Textur und andere ernährungsphysiologisch wichtige Eigenschaften des Endproduktes die Tatsache zu Nutze, daß ein erheblicher Teil der in den Ausgangsmaterialien vorhandenen Proteine tierischen Ursprungs bereits bei Temperaturen zwischen 40 und 75° C und darüber hinaus in sehr viel kürzerer Zeit als pflanzliche Proteine koaguliert. Man erhält daher beim erfindungsgemäßen Verfahren unmittelbar im Anschluß an den Spalt im Hochgeschwindigkeitsemulgator eine teilkoagulierte Emulsionsmasse, die bereits derart verfestigt ist, daß damit eine Zerstörung der angestrebten Textur des Produktes während der Weiterverarbeitung verhindert wird. Der erfindungsgemäße Effekt insbesondere auf die Textur des Produktes ist nur bei der erfindungsgemäßen Temperaturführung möglich, da ein zu schnelles Erhitzen auf noch höhere Temperaturen (wie beim zuvor geschilderten Stand der Technik) dazu führt, daß das Produkt zu schnell vollständig koaguliert und damit seine ernährungsphysiologisch wertvollen Eigenschaften, insbesondere die fleischliche Textur, verliert. Das erfindungsgemäße Verfahren benötigt darüber hinaus durch die niedrigeren Prozeßtemperaturen deutlich weniger Energie und ist problemlos in der Verfahrensführung. Weiterhin ist das resultierende Produkt im Gegensatz zu allen bisher bekannten Produkten, insbesondere im Hinblick auf die Textur, mit natürlichen Fleischstücken vergleichbar und nach der Sterilisation sogar überlegen. Da darüber hinaus die Ausgangsmaterialien sogar ausschließlich tierischen Ursprungs sein können, erzielt man ein Produkt, das eine außergewöhnlich hohe, allen bekannten Produkten überlegene Tierakzeptanz aufweist.

In einer bevorzugten Ausführungsform der Erfindung wird der Spalt zwischen den Platten des Hochgeschwindigkeitsemulgators auf eine Breite von 0,2 bis 2 mm, bevorzugt 0,6 mm, eingestellt.

Die Erfindung schlägt weiterhin vor, die Fleischemulsion im Hochgeschwindigkeitsemulgator auf 50 bis 65° C zu erhitzen. Die Erwärmung erfolgt in jedem Fall bevorzugt durch mechanische Energie, ggf. zusätzlich durch Heißdampfinjektion. Der Hochgeschwindigkeitsemulgator kann dabei beispielsweise aus einer feststehenden und einer sehr schnell rotierenden Platte bestehen, zwischen denen der erwähnte Spalt offen bleibt. Aufgrund der Viskosität der Emulsionsmasse, die beispielsweise vom Anteil der Trockenbestandteile abhängt, der Pumpgeschwindigkeit und des Plattenabstandes kommt es normalerweise bereits allein durch die dadurch entstehende mechanische Energie zu einer hinreichend schnellen Erwärmung der Emulsion auf die angestrebte Temperatur. Sollte dies durch Änderung der Prozeßbedingungen ggf. nicht mehr ausreichen, kann eine weitere Erhöhung der Temperatur durch kurzfristige Heißdampfinjektion bewirkt werden. Um einen optimalen Effekt zu erzielen, ist es beim erfindungsgemäßen Verfahren wesentlich, daß eine Koagulation der Ausgangsmaterialien nicht zu frühzeitig, d. h. bereits vor oder direkt im Hochgeschwindigkeitsemulgator erfolgt. Es ist daher notwendig, daß die Temperatur der Ausgangsmaterialien bis zum Einpumpen in den Hochgeschwindigkeitsemulgator unterhalb von 50° C, bevorzugt unterhalb von 35° C gehalten wird.

Als besonders vorteilhaft für die Bildung der erwünschten Textur hat sich eine Geschwindigkeit der Emulsionsmasse im Prozeßrohr zwischen 0,5 und 3 m/min, bevorzugt 1 m/min, und eine Haltezeit darin zwischen 20 s und 20 min, bevorzugt zwischen 4 und 10 min, erwiesen.

Die teilkoagulierte Emulsionsmasse im Prozeßrohr wird kontinuierlich durch das Nachpumpen der Fleischemulsion durch den Hochgeschwindigkeitsemulgator im Prozeßrohr vorgeschoben und tritt als entsprechend dicker Strang an dessen Ende aus.

Eine weitere Ausführungsform der Erfindung sieht vor, daß das aus dem Prozeßrohr austretende Produkt durch Messerblenden in Stränge oder Stücke geschnitten wird. Diese Messerblenden können entweder im Endstück des Prozeßrohres oder unmittelbar im Anschluß daran befestigt sein. Dabei ist sowohl ein Aufreißen des großen Produktstranges in einer Dimension, also zu mehreren kleine Produktsträngen, als auch daran anschließend in der anderen Dimension, also zu entsprechend großen Produktstücken, möglich.

Eine besondere Ausführungsform der Erfindung sieht vor, daß das geschnittene Produkt in einem Ofen auf eine Kerntemperatur von 70 bis 95° C, bevorzugt 80° C, erhitzt wird. Dieser an den eigentlichen Herstellungsprozeß anschließende Schritt kann sowohl mit den oben erwähnten dünnen Produktsträngen als auch mit bereits geschnittenen Stücken durchgeführt werden. Besonders bevorzugt ist dabei die Verwendung eines kontinuierlichen Backofens, wobei die Verweildauer des Produktes darin zwischen 1 und 10 min liegt. Während des im Ofen stattfindenden Backprozesses koagulieren weitere im Produkt enthaltene Proteine und zwar bevorzugt im Randbereich der Stränge und/oder Stücke. Im Ergebnis erhält man dadurch ein Produkt, das äußerlich robuster und belastbarer ist und ein problemloseres Handling ermöglicht. Dies ist insbesondere hinsichtlich des abschließenden Abfüllens, Eindosens und Sterilisierens von Bedeutung.

In einer besonders bevorzugten Ausführungsform der Erfindung kann im Anschluß an die Ofenbehandlung ein weiteres Schneiden des Produktes erfolgen, was natürlich dann, wenn noch Stränge vorliegen, ein unumgänglicher Schritt zur Konfektionierung des Produktes ist, wobei auf diese Weise zusätzlich glatte Schnittflächen entstehen. Das erfindungsgemäß hergestellte stückige Fleischemulsionsprodukt ist durch seine Textur und die damit verbundene verbesserte Bißfestigkeit und Saftigkeit, die durch ein verstärktes Festhalten von Flüssigkeit ermöglicht wird, allen bekannten Produkten deutlich überlegen, wobei besonders darauf hinzuweisen ist, daß diese vorteilhaften Eigenschaften des Produktes durch die abschließende Sterilisation ganz im Gegensatz zum normalen Verhalten fleischlicher Rohmaterialien in diesem Schritt nicht oder nur unwesentlich beeinträchtigt werden. Dadurch kann auch eine deutlich höhere Tierakzeptanz des Endproduktes erreicht werden, was durch Fütterungsversuche eindrücklich untermauert werden konnte. Mit dem erfindungsgemäßen Verfahren ist es daher auf einfache und kostengünstige Weise möglich, ein Produkt zu erzeugen, das aufgrund seiner Rezeptur und Textur unter ernährungsphysiologischen Gesichtspunkten mit natürlichen Fleischstücken vergleichbar ist und zusätzlich noch die Anreicherungsmöglichkeit mit ergänzenden Nährstoffen, wie wertvollen pflanzlichen Proteinen, und deren Überführung in eine tieradäquate Form ermöglicht.

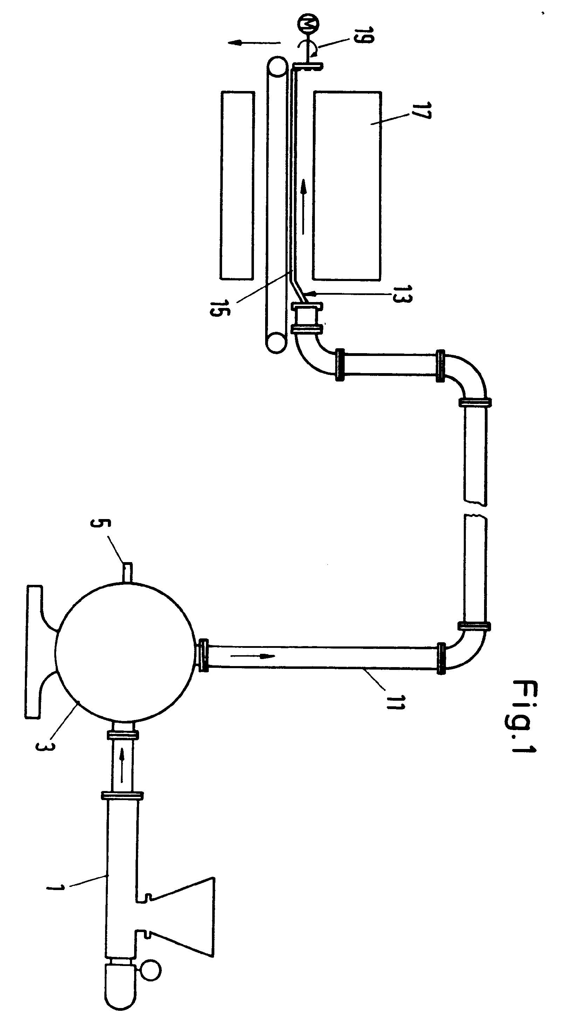

Weitere Vorteile und Merkmale der Erfindung ergeben sich aus den nachfolgenden Beispielen, die zur Verdeutlichung anhand der anliegenden Zeichnungen erläutert werden sollen. Dabei zeigen
Fig. 1 ein Prozeßschema des erfindungsgemäßen Verfahrens; und
Fig. 2 einen vergrößerten Ausschnitt daraus hinsichtlich des Hochgeschwindigkeitsemulgators.

### Beispiel 1

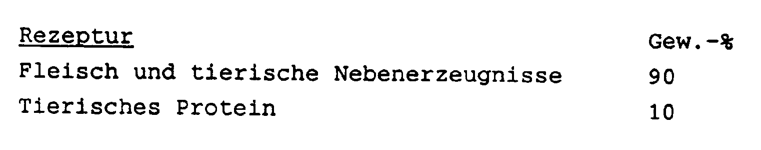

Alle Bestandteile werden zunächst in einem handelsüblichen Kutter fein emulgiert. Der resultierende viskose Teig weist durch die mechanische Beanspruchung eine Temperatur von etwa 30 bis 35° C auf. Um jegliche teilweise Denaturierung oder Koagulation der tierischen Proteine zu vermeiden, ist es wichtig, auf dieser Stufe des Prozesses die Temperatur der Fleischemulsion unterhalb von 50° C, bevorzugt unterhalb von 35° C zu halten. Die Fleischemulsion wird dann kontinuierlich mittels einer Mohnopumpe 1 bei einem Druck von 4 bis 5 bar in einen Hochgeschwindigkeitsemulgator 3 gepumpt, in dem die Temperatur der Emulsion durch mechanische Beanspruchung schnell auf etwa 50° C ansteigt. Für den Fall, daß die erwünschte Temperatur nicht allein durch mechanische Energie erreicht wird, ist eine Einlaßöffnung 5 für Heißdampf vorgesehen.

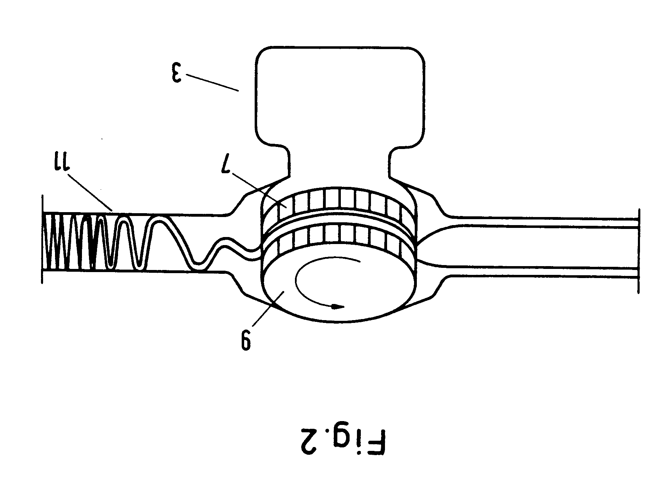

Der Hochgeschwindigkeitsemulgator 3 ist in Fig. 2 noch einmal vergrößert dargestellt. Man erkennt die beiden darin angeordneten Platten 7 und 9, wobei die untere Platte 7 fest steht und die obere Platte mit einer Geschwindigkeit von 1400 bis 1500 UPM in der angegebenen Richtung rotiert. Die in der Darstellung von links eintretende Emulsionsmasse, die eine Temperatur von etwa 35° C aufweist, wird in den etwa 0,6 mm breiten Spalt zwischen den Platten gepreßt, dort weiter emulgiert und gleichzeitig auf die erwünschte Temperatur erhitzt, so daß die teilweise Koagulation der Emulsionsmasse unmittelbar nach Austritt aus dem Emulgator (in der Darstellung nach rechts) erfolgt. Die teilkoagulierte Masse tritt dann in das Prozeßrohr 11 ein. Das Prozeßrohr hat einen Durchmesser von 10 cm und eine Länge von 4 m. Die Durchgangsgeschwindigkeit der Emulsionsmasse liegt bei 1 m/min, deren Haltezeit also bei etwa 4 min.

Nach Durchgang durch das Prozeßrohr 11 wird der Emulsionsstrang an dessen Ende von einer entsprechenden Messerblende 13 in dünne Stränge zerteilt, die unmittelbar auf das Band 15 eines kontinuierlichen Backofens 17 gegeben werden. Nach Abschluß des Backprozesses, der bei einer Kerntemperatur von etwas mehr als 80° C und einer Verweildauer im Ofen von 3 min abläuft, werden die Stränge nach Austritt aus dem Ofen 17 von der Schneidvorrichtung 19 in entsprechend dimensionierte Stücke geschnitten und abschließend zusammen mit einer entsprechenden Soße abgefüllt, eingedost und sterilisiert.

### Beispiel 2

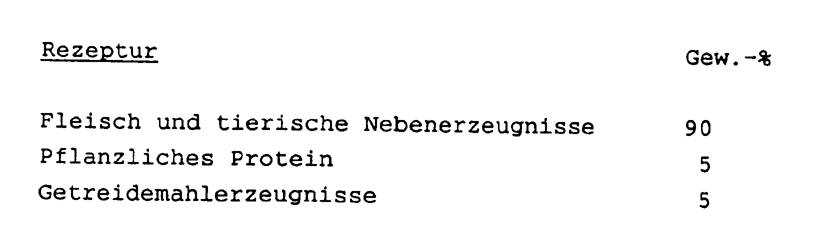

Die Prozeßführung ist weitgehend identisch mit derjenigen in Beispiel 1. Auch bei Verwendung des angegebenen Anteils an pflanzlichen Proteinen ergeben sich hervorragende Ergebnisse hinsichtlich Geschmack und Textur des Produktes.

In beiden Fällen kann die abschließende Ofenbehandlung auch weggelassen werden, wobei dann die endgültige Koagulation des Produktes im Sterilisationsschritt erfolgt, der bei Temperaturen um 130° C durchgeführt wird.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen wesentlich sein.

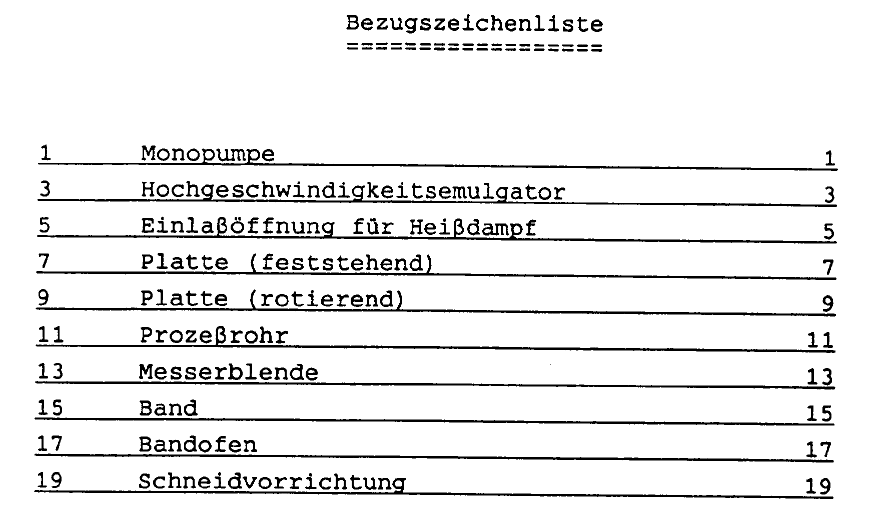

## Patentansprüche

1. Verfahren zur Herstellung eines stückigen Fleischemulsionsproduktes, wobei die Ausgangsmaterialien bei Temperaturen von unter 50° C zu einer Fleischemulsion verarbeitet werden, dadurch gekennzeichnet, daß die Fleischemulsion durch einen Spalt zwischen den Platten des Hochgeschwindigkeitsemulgators in ein Prozeßrohr gedrückt und dabei schnell auf 40 bis 75° C erhitzt wird, wobei die in den Ausgangsmaterialien enthaltenen Proteine im wesentlichen tierischen Ursprungs sind und hinsichtlich Temperatur und Zeitdauer unterschiedliches Koagulationsverhalten zeigen.

2. Verfahren nach Anspruch 1, dadurch gekennzeichnet, daß die Verarbeitung der Ausgangsmaterialien zur Fleischemulsion unterhalb von 35° C erfolgt.

3. Verfahren nach Anspruch 1 oder 2, dadurch gekennzeichnet, daß der Spalt zwischen den Platten des Hochgeschwindigkeitsemulgators auf eine Breite von 0,2 bis 2 mm, bevorzugt 0,6 mm, eingestellt wird.

4. Verfahren nach einem der vorangehenden Ansprüche, dadurch gekennzeichnet, daß die Fleischemulsion im Hochgeschwindigkeitsemulgator auf 50 bis 65° C erhitzt wird.

5. Verfahren nach einem der vorangehenden Ansprüche, dadurch gekennzeichnet, daß die Erwärmung der Fleischemulsion im Hochgeschwindigkeitsemulgator durch mechanische Energie, ggf. durch zusätzliche Heißdampfinjektion erfolgt.

6. Verfahren nach einem der vorangehenden Ansprüche, dadurch gekennzeichnet, daß die Geschwindigkeit der Emulsionsmasse im Prozeßrohr zwischen 0,5 und 3 m/min, bevorzugt 1 m/min, und deren Haltezeit darin zwischen 20 s und 20 min, bevorzugt zwischen 4 und 10 min, liegt.

7. Verfahren nach einem der vorangehenden Ansprüche, dadurch gekennzeichnet, daß das aus dem Prozeßrohr austretende Produkt durch Messerblenden in Stränge oder Stücke geschnitten wird.

8. Verfahren nach Anspruch 7, dadurch gekennzeichnet, daß das aus dem Prozeßrohr austretende Produkt in einem Ofen auf eine Kerntemperatur von 70 bis 95° C, bevorzugt 80° C, erhitzt wird.

9. Verfahren nach Anspruch 8, dadurch gekennzeichnet, daß ein kontinuierlicher Backofen verwendet wird, wobei die Verweildauer des Produktes darin zwischen 1 und 10 min liegt.

10. Verfahren nach Anspruch 8 oder 9, dadurch gekennzeichnet, daß im Anschluß an die Ofenbehandlung ein weiteren Schneiden des Produktes erfolgt.

## Claims

1. Process for preparing a meat emulsion product in lump form, the starting materials being processed at temperatures below 50°C to form a meat emulsion, characterised in that the meat emulsion is forced through a gap between the plates of the high-speed emulsifier into a process tube and at the same time heated rapidly up to 40 to 75°C, the proteins contained in the starting materials being substantially of animal origin and exhibiting different coagulation behaviour with regard to temperature and duration.

2. Process according to Claim 1, characterised in that the processing of the starting materials to form the meat emulsion is performed below 35°C.

3. Process according to Claim 1 or 2, characterised in that the gap between the plates of the high-speed emulsifier is set to a width of 0.2 to 2 mm, preferably 0.6 mm.

4. Process according to one of the preceding claims, characterised in that the meat emulsion is heated in the high-speed emulsifier up to 50 to 65°C.

5. Process according to one of the preceding claims, characterised in that the heating of the meat emulsion in the high-speed emulsifier is performed by mechanical energy, if appropriate by additional hot steam injection.

6. Process according to one of the preceding claims, characterised in that the speed of the emulsion mass in the process tube is between 0.5 and 3 m/min, preferably 1 m/min, and its holding time therein is between 20 s and 20 min, preferably between 4 and 10 min.

7. Process according to one of the preceding claims, characterised in that the product emerging from the process tube is cut by knife shutters into pellets or lumps.

8. Process according to Claim 7, characterised in that product emerging from the process tube is heated in an oven to a core temperature of 70 to 95°C, preferably 80°C.

9. Process according to Claim 8, characterised in that a continuous baking oven is used, the dwell time of the product therein being between 1 and 10 min.

10. Process according to Claim 8 or 9, characterised in that the oven treatment is followed by a further cutting of the product.

## Revendications

1. Procédé de fabrication d'un produit en morceaux à base d'émulsion de viande, dans lequel les matières de départ sont traitées à des températures inférieures à 50°C pour former une émulsion de viande, caractérisé en ce que l'émulsion de viande est refoulée dans un tube de traitement à travers une fente formée entre les plateaux de l'émulsifieur à grande vitesse et, dans cette action, rapidement chauffée à une température de 40 à 75°C, les protéines contenues dans les matières de départ étant essentiellement d'origine animale et présentant un comportement de coagulation variable sous l'aspect de la température et de la durée.

2. Procédé selon la revendication 1, caractérisé en ce que le traitement des matières de départ gui donne l'émulsion de viande s'effectue au-dessous de 35°C.

3. Procédé selon la revendication 1 ou 2, caractérisé en ce que la fente entre les plateaux de l'émulsifieur à grande vitesse est réglée sur une largeur de 0,2 à 2 mm, de préférence de 0,6 mm.

4. Procédé selon une des revendications précédentes, caractérisé en ce que l'émulsion de viande est chauffée à une température de 50 à 65°C dans l'émulsifieur à grande vitesse.

5. Procédé selon une des revendications précédentes, caractérisé en ce que le chauffage de l'émulsion de viande à l'intérieur de l'émulsifieur à grande vitesse est assuré par une énergie mécanique, éventuellement par injection additionnelle de vapeur chaude.

6. Procédé selon une des revendications précédentes, caractérisé en ce que la vitesse de la masse en émulsion dans le tube de traitement est d'entre 0,5 et 3 m/min, de préférence de 1 m/min, et son temps de séjour dans ce tube est d'entre 20 s et 20 min, de préférence d'entre 4 et 10 min.

7. Procédé selon une des revendications précédentes, caractérisé en ce que le produit sortant du tube de traitement est découpé par des filières en boudins ou morceaux.

8. Procédé selon la revendication 7, caractérisé en ce que le produit sortant du tube de traitement est chauffé, dans un four, à une température centrale de 70 à 95°C, de préférence de 80°C.

9. Procédé selon la revendication 8, caractérisé en ce qu'on utilise un four de cuisson continu, la durée de séjour du produit dans ce four étant d'entre 1 et 10 min.

10. Procédé selon la revendication 8 ou 9, caractérisé en ce qu'à la suite du traitement au four, on procède à un nouveau découpage du produit.
